# FASCICULE DE BREVET EUROPEEN

(11) **EP 1 885 929 B1**
(45) Date de publication et mention de la délivrance du brevet: **09.06.2010**
(21) Numéro de dépôt: 06743796.2
(22) Date de dépôt: 11.04.2006
(51) Int. Cl.: D04H 13/00, E02D 3/00, B32B 5/26

(54) **COMPLEXE TEXTILE BASE DE NON TISSE ET SON PROCEDE DE REALISATION**
VLIESSTOFFBASIERTER TEXTILER KOMPLEX UND HERSTELLUNGSVERFAHREN DAFÜR
NONWOVEN-BASED TEXTILE COMPLEX AND METHOD FOR MAKING SAME

(30) Priorité: 14.04.2005 FR 0550953
(43) Date de publication de la demande: 13.02.2008
(73) Titulaire: MDB TEXINOV SA, 38110 Saint Didier de la Tour (FR)
(72) Inventeur: TANKERE, Jacques, F-01800 Meximieux (FR); DUCOL, Jean-Paul, F-69007 Lyon (FR)
(74) Mandataire: Vuillermoz, Bruno
(86) Numéro de dépôt international: PCT/FR2006/050335
(87) Numéro de publication internationale: WO 2006/108998

(56) Documents cités:
- EP-A- 1 477 300
- WO-A-95/03443
- FR-A- 2 581 666
- US-A- 5 334 446

## Description

### DOMAINE DE L'INVENTION

La présente invention concerne un produit textile composite, tels que ceux que l'on trouve employés dans les géotextiles. La présente invention concerne également un procédé de fabrication d'un tel produit textile composite. Plus particulièrement, la présente invention se rapporte à un produit textile composite comprenant au moins un textile non-tissé et à un procédé de fabrication d'un tel produit textile composite mettant en oeuvre un textile non tissé.

Les géotextiles sont des matériaux souples et flexibles qui permettent de remplir des fonctions très diverses dans des domaines variés. Naturellement, les fonctions que doivent remplir ces géotextiles conditionnent le choix des matériaux entrant dans leur constitution, leur géométrie, ainsi que leur procédé de fabrication. Des exemples non limitatifs de domaines dans lesquels de tels géotextiles trouvent une application, se rencontrent dans les domaines de la distribution de courant électrique, de la distribution de signal optique, de l'adduction de fluides tels que l'eau ou le gaz, et par ailleurs, le renforcement des sous-couches de terrain artificielles, en particulier quand il s'agit de maintenir des remblais inclinés comme des remblais de terre, de sable ou de ballast ferroviaire.

En règle générale, de tels géotextiles comprennent un ou plusieurs matériaux souples et flexibles, tels que des non-tissés, formant des pièces de surfaces étendues telles que des nappes. En outre, ces nappes sont associées à un ou plusieurs éléments rapportés sur ou solidarisés avec elles. Ces éléments rapportés assurent la fonction principale dévolue aux géotextiles. Il peut ainsi s'agir par exemple, d'un câble ou d'un faisceau de câble électrique, ou encore d'un faisceau de fibres optiques. Il peut encore s'agir de tuyaux, de préférence flexibles, permettant de transporter un fluide.

Quant à l'application à la retenue de terrains meubles, l'élément fonctionnel est plutôt constitué d'un filet de fils présentant une bonne résistance à la traction. Ce filet est destiné à former des points d'accrochage de façon à maintenir le terrain meuble, en particulier dans le cas d'un remblai incliné. En outre, ce filet confère une résistance en traction au non-tissé, lui conférant une stabilité dimensionnelle et réduisant de la sorte les risques de déchirures du non-tissé.

De l'art antérieur, on connaît des géotextiles comprenant au moins une nappe en matériau non tissé, et intégrant un élément fonctionnel tels que ceux décrits précédemment.

Pour assurer la solidarisation indispensable des éléments fonctionnels sur la nappe de non-tissé, il existe différentes solutions dans l'art antérieur qui peuvent être mises en oeuvre *in situ,* c'est-à-dire sur le lieu d'utilisation finale du textile composite. Cependant, la solidarisation des produits textiles composites *in situ* est parfois délicate à mettre en oeuvre notamment du fait des conditions climatiques. Il est ainsi difficile d'envisager un collage pérenne lorsque celui-ci doit être effectué sous la pluie.

Une autre méthode consiste à effectuer la solidarisation des éléments fonctionnels par avance en usine. Pour solidariser les éléments fonctionnels sur les nappes de non tissé, l'art antérieur recense des procédés de fabrication qui comportent des opérations de couture, d'aiguilletage et/ou de collage de l'élément fonctionnel sur le support en non-tissé.

Cependant, l'assemblage par ces procédés est relativement long à réaliser et délicat à mettre en oeuvre, notamment par couture lorsqu'il s'agit de manipuler des pièces de grandes dimensions. De plus, en fonction des caractéristiques du fil de couture et des caractéristiques du non tissé, le produit textile résultant peut risquer d'être déchiré facilement, ce qui le rend incompatible avec certaines applications précédemment évoquées.

Un procédé alternatif consiste à encoller l'élément fonctionnel entre deux couches formées chacune par une nappe de non tissé. L'inconvénient d'un tel procédé, outre le fait qu'il faut employer une colle robuste donc onéreuse, réside dans le fait de devoir utiliser une grande surface de matériaux non-tissés pour encoller de façon fiable l'élément fonctionnel entre les deux nappes. En effet, il est en général nécessaire d'encoller de grandes surfaces de non-tissé pour assurer un maintien durable. Ce qui est évidemment préjudiciable au coût final du produit textile composite.

### EXPOSE DE L'INVENTION

La présente invention a donc pour objet un produit textile composite permettant de solidariser un élément fonctionnel avec une nappe et ne présentant pas les inconvénients de l'art antérieur précédemment cités, notamment en réalisant une économie de matière.

L'invention concerne un produit textile composite comportant au moins une nappe constituée d'un non tissé thermofusible et au moins un élément fonctionnel. Selon l'invention, l'élément fonctionnel se trouve en toute ou partie positionné entre la nappe de non-tissé et une bande constituée d'un matériau thermofusible. En outre toujours selon l'invention, la nappe et la bande sont solidarisées par fusion de leurs surfaces en contact.

Autrement dit, on place l'élément fonctionnel entre nappe et bande, puis on chauffe localement la nappe et la bande de manière à les faire fondre superficiellement et en assurer ainsi la cohésion, par polymérisation. L'élément fonctionnel est alors maintenu entre ces deux couches.

En pratique, l'opération de fusion est opérée par thermopressage ou par soudage à ultrasons.

Selon une forme de réalisation de l'invention, la bande est formée par un repli de la nappe. Le matériau constituant la bande est alors identique au matériau constituant la nappe. Cela permet dans certains cas de simplifier la fabrication.

Selon une forme de réalisation avantageuse de l'invention, la bande est indépendante de la nappe et elle est constituée en un matériau de nature identique ou différente de celui de la nappe. Cette forme de réalisation est particulièrement économique puisqu'elle permet d'utiliser par exemple des bandes constituées par des chutes excédentaires issues de la nappe.

L'élément fonctionnel peut être constitué d'un élément d'insertion, donc revêtant effectivement la nappe de non tissé sur une surface plus ou moins conséquente, ou peut être simplement solidarisé à celle-ci au niveau de l'un de ses bords, et s'étendre ainsi seul, lorsque le besoin s'en fait sentir.

De préférence, la nappe en non-tissé est renforcée par des fils cousus, tissés ou tricotés selon un réseau présentant au moins une direction privilégiée, et par exemple en chaîne ou en trame. Cette caractéristique procure une résistance additionnelle au non-tissé.

Selon une autre forme de réalisation de l'invention, l'élément fonctionnel est constitué d'une grille de préférence souple et flexible, de manière à former un géotextile composite.

Selon une forme de réalisation alternative de l'invention, l'élément fonctionnel comporte au moins un câble technique, notamment électrique ou une fibre optique.

Selon une autre forme de réalisation de l'invention, l'élément fonctionnel comprend au moins une gaine étanche de manière à former une conduite de fluide ou de gaz.

Selon encore une autre forme de réalisation de l'invention, l'élément fonctionnel comprend au moins un tube muni d'orifices propres à constituer un composite de drainage.

D'autre part, l'invention concerne un procédé de fabrication d'un produit textile composite comportant les étapes suivantes :
■ assembler au moins une nappe constituée d'un non-tissé et au moins un élément fonctionnel,
■ poser sur toute ou partie de l'élément fonctionnel une bande indépendante de manière à ce que ledit élément fonctionnel soit positionné entre la nappe et la bande,
■ solidariser la nappe et la bande par fusion de leurs surfaces en contact.

Ce procédé permet de fabriquer un produit textile composite conforme à l'invention.

En pratique, l'opération de fusion comporte une étape de thermopressage ou une étape de soudage par ultrasons.

L'élément fonctionnel est alors maintenu entre ces deux couches, plus ou moins fermement en fonction de l'application souhaitée et des paramètres de fabrication.

### DESCRIPTION SOMMAIRE DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est une représentation schématique du principe général de l'invention.
La figure 2 est une représentation schématique d'une forme de réalisation de l'invention mettant en oeuvre comme élément fonctionnel une grille géotextile.
La figure 3 est une représentation schématique d'une installation propre à réaliser le complexe de la figure 2.
La figure 4 est une vue analogue à la figure 3, d'un autre type d'installation propre à mettre en oeuvre le procédé de l'invention.
La figure 5 est une représentation schématique en section, visant à illustrer une autre forme de réalisation de l'invention.
La figure 6 est une représentation schématique d'une autre forme de réalisation du composite conforme à l'invention, dont la figure 7 est une représentation schématique en section.

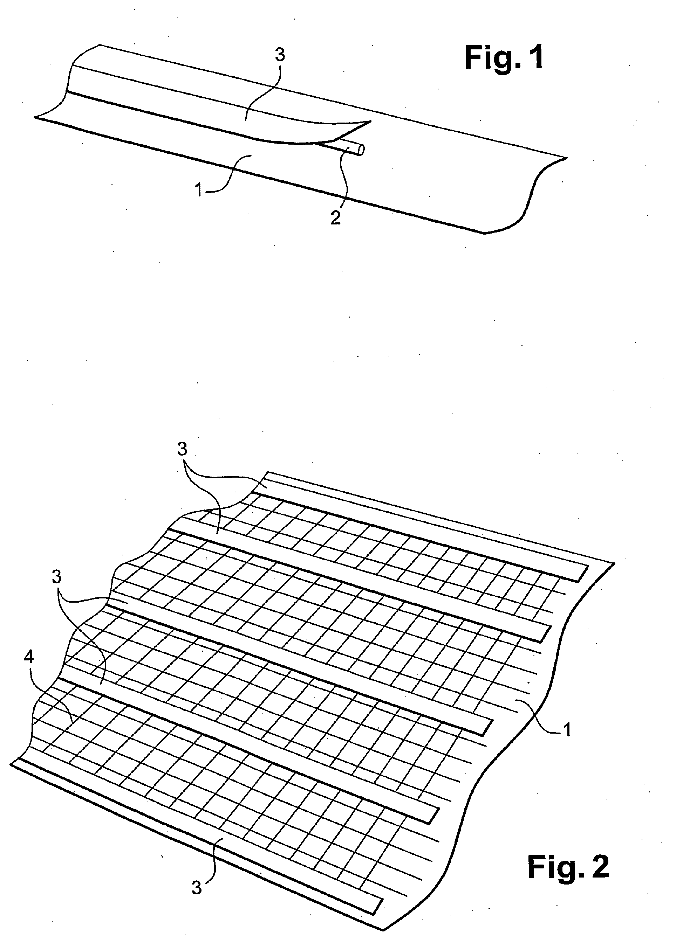

On a donc représenté au sein de la figure 1 le principe général sous-tendant la présente invention. Fondamentalement, celle-ci vise un complexe textile, plus particulièrement destiné au domaine des géotextiles.

Ce complexe comporte tout d'abord une nappe en non-tissé (1), par exemple réalisée en polypropylène ou en polyester. Cependant, ce non-tissé pourrait être réalisé en tout matériau thermofusible, compatible avec des conditions de fabrication économiquement viables, tels que par exemple en polyoléfine. De manière connue, un tel non-tissé, outre son coût de fabrication réduit, présente l'avantage de développer des propriétés de filtration ou de séparation qui, en fonction des applications envisagées, peuvent être requises.

On peut également mettre en oeuvre les non-tissés pour remplir des fonctions hydrauliques, c'est-à-dire pour évacuer l'eau dans les ouvrages de génie civil.

Selon l'invention, on rapporte sur cette nappe (1) un élément fonctionnel ou « insert » (2), susceptible d'être constitué par tout élément, et notamment une grille géotextile (4) ajourée, un filin métallique ou non de renfort, une fibre optique, voire un tube creux, propre à permettre le passage de fluide en son sein, par exemple pour faire fonction de drain ou de canalisation d'irrigation.

Cet insert est fixé sur la nappe au moyen d'une bande (3), également réalisée en un matériau non-tissé, et avantageusement dans le même matériau que celui constitutif de la nappe (1), de telle sorte à optimiser l'adhérence entre la nappe et la bande.

Cette bande est solidarisée sur la nappe par fusion locale partielle, celle-ci étant assurée par l'émission d'air chaud au moyen de buses, voire par l'émission d'ultrasons, au moyen d'une sonotrode, les buses et les sonotrodes étant bien évidemment positionnées en conséquence, en fonction du lieu de solidarisation souhaité.

La solidarisation proprement dite des bandes (3) sur la nappe (1), emprisonnant totalement ou partiellement l'insert (2), est optimisée par une étape de pressage, afin de favoriser la jonction, et corollairement la résistance mécanique du complexe ainsi obtenu.

Lorsque l'insert est constitué d'une grille géotextile (4), telle que représentée sur la figure 2, celle-ci est choisie suffisamment ajourée pour permettre le contact et donc la jonction effective entre la ou les bandes (3) et la nappe (1).

Une telle grille est par exemple réalisée à base de filets techniques en polyéthylène oui par extrusion. Il importe cependant que son point de fusion soit supérieur à celui des non-tissés constitutifs de la nappe (1) et des bandes (3), de façon à ne pas être altérée par l'opération de jonction ou de solidarisation des différents composants.

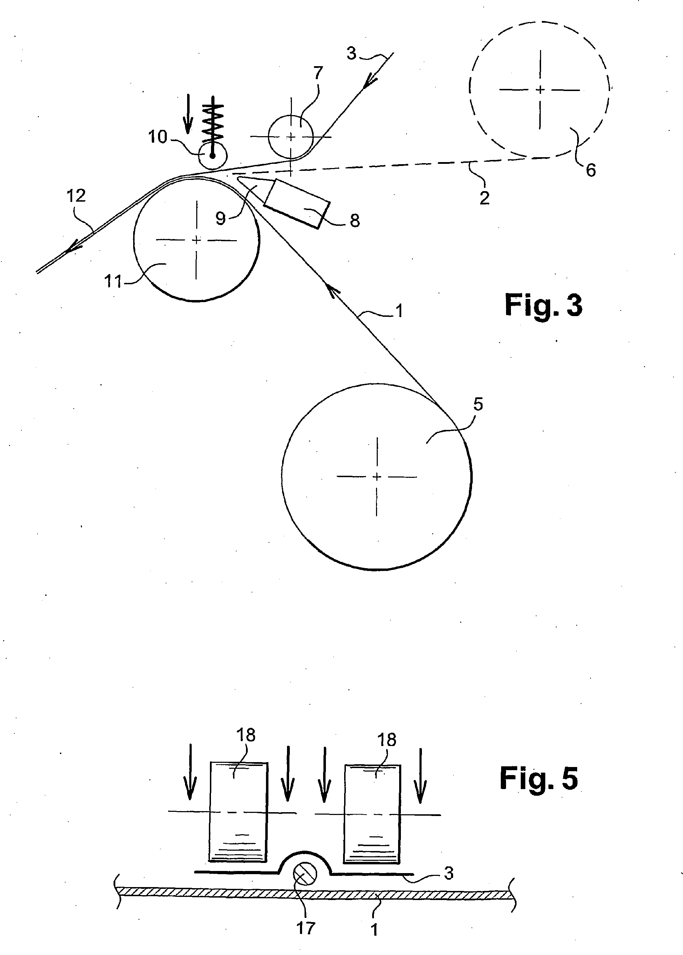

On a schématiquement représenté en relation avec la figure 3 une installation destinée à réaliser un complexe conforme à l'invention.

Ainsi, la nappe de non tissé (1) stockée sous forme d'une bobine (5), est déroulée par tout moyen moteur (non représenté) au niveau d'un cylindre récepteur (11), au niveau duquel aboutissent d'une part, l'insert (2), déroulé d'une bobine (6) et la ou les bandes (3), également avantageusement stockées sous forme de bobine(s), cette (ces) dernières étant en outre renvoyées au niveau d'un cylindre (7) préalablement au cylindre d'agglomération (11), pour favoriser son chauffage localisé.

En effet, l'extrémité d'une ou de plusieurs buses (9) associées à une source d'air chaud (8), dont la température est choisie en fonction du point de fusion des non-tissés en présence aboutit juste en amont proche de la ligne de tangence des ces trois composants sur le cylindre d'agglomération (11).

En effet, si l'on souhaite certes aboutir à la fusion partielle des deux non-tissés au niveau de leurs faces en regard, on vise également à diminuer autant que faire se peut la quantité d'énergie nécessaire à ce résultat.

En fait, on vise un compromis entre efficacité du chauffage et vitesse de déroulement des non-tissés à ce niveau.

Un ou plusieurs galets presseurs (10) exercent une pression en aval de la zone d'acheminement de la chaleur, mais cependant sur la périphérie du cylindre d'agglomération (11), afin de favoriser et d'optimiser la jonction effective entre la ou les bandes de non tissés (3) et la nappe (1), de telle sorte à assurer la fixation effective de l'insert à ce niveau.

Le complexe ainsi réalisé est alors appelé (12) pour être stocké, notamment sous la forme d'une bobine (non représentée).

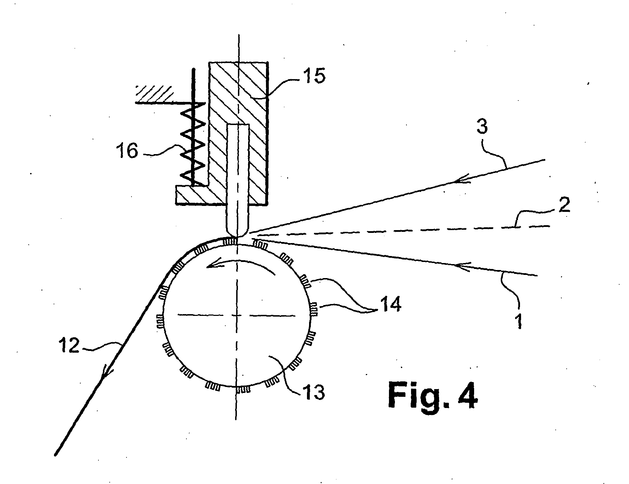

La source d'énergie mise en oeuvre pour assurer la thermofusion des deux non-tissés peut être constituée par des ultra-sons. On a ainsi représenté au sein de la figure 4 la vue schématique d'une telle installation.

Le principe demeure identique à l'installation précédemment décrite. Cependant, le cylindre dit « d'agglomération » est remplacé ici par un cylindre (13) faisant fonction d'enclume pour une ou plusieurs sonotrodes (15), montées sur un système de contrôle de pression (16) à l'aplomb de ladite enclume (13). Ce faisant, il devient possible d'exercer la pression adéquate au niveau du lieu de tangence simultanée de la nappe de non-tissé (1), de l'insert (2) et de la bande (3), notamment pour tenir compte des éventuelles modifications de relief à ce niveau, inhérentes par exemple aux fils de trame de la grille géotextile (4), lorsqu'elle constitue l'insert.

Par ailleurs, on peut munir la périphérie de l'enclume (13) de saillies radiales (14), propres à assurer l'entraînement des différents composants à assembler, le cylindre constituant l'enclume étant alors moteur. La géométrie du relief (14) ménagé à la périphérie de l'enclume (13) est définie de réaliser une ou plusieurs lignes de soudure adaptées à la surface des composants à relier.

Cette forme de réalisation permet de mieux localiser la délivrance d'énergie propre à réaliser la fusion partielle des non-tissés, de sorte que la quantité d'énergie effectivement consommée est diminuée par rapport à la forme de réalisation décrite de la figure 3.

On a représenté en relation avec la figure 5 une vue en section du complexe conforme à l'invention, dans lequel l'insert est par exemple constitué d'un câble métallique de renfort (17). Là encore, le principe précédemment décrit demeure identique, seul le galet presseur (10) étant remplacé par deux galets presseurs (18), exerçant leur action de part et d'autre dudit câble.

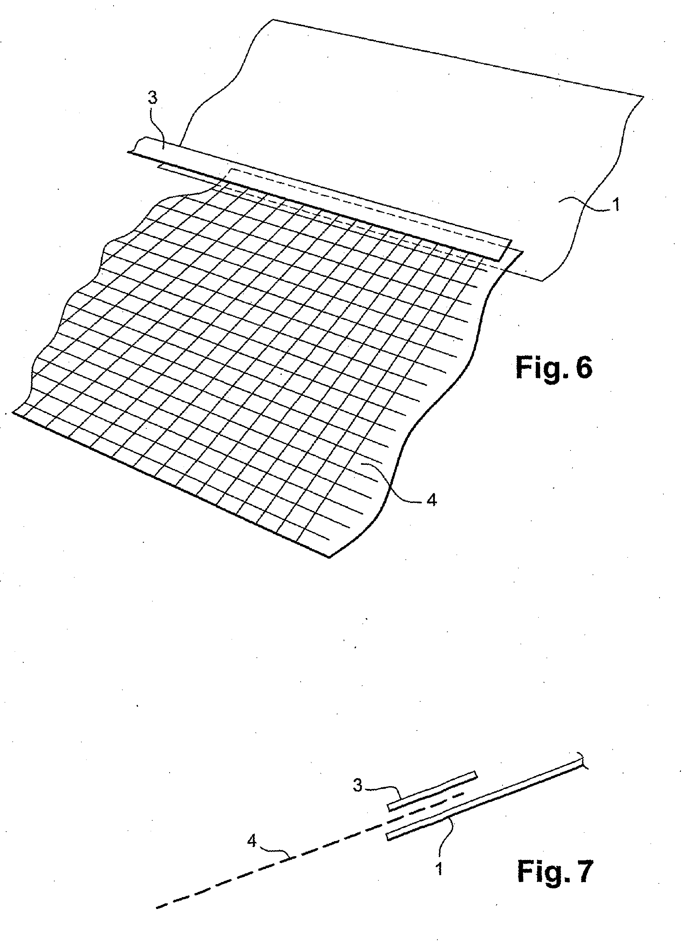

On a représenté en relation avec les figures 6 et 7 une forme particulière de réalisation de l'invention. Dans celle-ci, l'élément fonctionnel, également constitué d'une grille (2), n'est solidarisé à la nappe en non-tissé (1) qu'au niveau de l'un des bords de cette dernière, mais toujours selon le même principe de l'invention, c'est-à-dire au moyen d'une bande (3), également en non tissé.

Le produit obtenu peut s'avérer utile dans certains contextes particuliers, mettant en oeuvre des géotextiles.

Selon l'invention, et lorsque une résistance mécanique du complexe est requise, on rapporte par tissage, couture ou tricotage sur la nappe (1) en sens chaîne, en sens trame ou en sens chaîne et trame des fils en tout matériau, mais notamment en matériau synthétique.

On conçoit dès lors tout l'intérêt de la présente invention, qui permet de manière simple et à faible coût de revient, de disposer de nappes textiles à effet technique additionnel, tout particulièrement applicables dans le domaine des géotextiles et du génie civil.

## Revendications

1. Produit textile composite comportant au moins une nappe constituée d'un non tissé thermofusible (1), et au moins un élément fonctionnel (2, 4, 17), ***caractérisé* en ce que** ledit élément fonctionnel se trouve en toute ou partie positionné entre ladite nappe de non-tissé (1) et une ou plusieurs bandes (3), également constituées d'un matériau thermofusible, dont l'une des dimensions est nettement inférieure à la dimension correspondante de ladite nappe, et **en ce que** la nappe (1) et la ou les bande(s) (3) sont solidarisées par fusion à tout le moins partielle de leurs surfaces en contact.

2. Produit textile composite selon la revendication 1, ***caractérisé* en ce que** l'opération de fusion est opérée par thermo pressage ou par soudage à ultrasons.

3. Produit textile composite selon l'une des revendications 1 et 2, ***caractérisé* en ce que** la nappe (1) et la ou les bandes (3) sont réalisées dans le même matériau.

4. Produit textile composite selon la revendication 3, ***caractérisé* en ce que** la bande (3) est formée par un repli de la nappe (1) sur elle-même.

5. Produit textile composite selon l'une des revendications précédentes, ***caractérisé* en ce que** la nappe en non-tissé (1) est renforcée par des fils cousus, tissés ou tricotés selon un réseau présentant au moins une direction privilégiée.

6. Produit textile composite selon l'une des revendications précédentes, ***caractérisé* en ce que** l'élément fonctionnel est constitué d'une grille (4) de préférence souple et flexible, de manière à former un géotextile composite.

7. Produit textile composite selon les revendications 1 à 5, ***caractérisé* en ce que** l'élément fonctionnel comporte au moins un câble électrique ou une fibre optique.

8. Produit textile composite selon l'une des revendications 1 à 5, ***caractérisé* en ce que** l'élément fonctionnel comprend au moins une gaine étanche de manière à former une conduite de fluide ou de gaz.

9. Produit textile composite selon l'une des revendications 1 à 5, ***caractérisé* en ce que** l'élément fonctionnel comprend au moins un tube muni d'orifices propres à constituer un composite de drainage.

10. Procédé pour la fabrication d'un produit textile composite, ***caractérisé* en ce qu'**il comporte les étapes consistant à :
■ assembler une nappe (1) constituée d'un non-tissé et au moins un élément fonctionnel,
■ poser sur toute ou partie de l'élément fonctionnel une bande indépendante de manière à ce que ledit élément fonctionnel soit positionné entre ladite nappe et ladite bande,
■ solidariser ladite nappe et ladite bande par fusion à tout le moins partielle de leurs surfaces en contact.

11. Procédé selon la revendication 10, ***caractérisé* en ce que** l'opération de fusion comporte une étape de thermo-pressage ou une étape de soudage par ultrasons.

## Claims

1. A textile composite comprising at least one sheet consisting of a thermofusible non-woven fabric (1) and at least one functional element (2, 4, 17), ***characterised* in that** said functional element is located wholly or partly between said sheet of non-woven fabric (1) and one or more strips (3) also made of a thermofusible material, one of the dimensions of said strip(s) being inferior to the corresponding dimension of the sheet of non-woven fabric, and **in that** the sheet (1) and the strip(s) (3) are joined by at least partial fusing of their contact surfaces.

2. A textile composite as claimed in claim 1, ***characterised* in that** the fusion operation is performed by thermopressing or ultrasonic welding.

3. A textile composite as claimed in claim 1 or 2, ***characterised* in that** the sheet (1) and the strip(s) (3) are made of the same material.

4. A textile composite as claimed in claim 3, ***characterised* in that** the strip (3) is formed by folding the sheet (1) onto itself.

5. A textile composite as claimed in any of the above claims, ***characterised* in that** the sheet of non-woven fabric (1) is reinforced by stitched, woven or knitted threads in a mesh having at least one preferred direction.

6. A textile composite as claimed in any of the above claims, ***characterised* in that** the functional element consists of a preferably supple and flexible mesh (4) so as to form a composite geotextile.

7. A textile composite as claimed in claims 1 to 5, ***characterised* in that** the functional element comprises at least one electric or optical fibre cable.

8. A textile composite as claimed in any of claims 1 to 5, ***characterised* in that** the functional element comprises at least one leakproof sheath in order to form a conduit for a fluid or gas.

9. A textile composite as claimed in any of claims 1 to 5, ***characterised* in that** the functional element comprises at least one tube with openings capable of constituting a composite drain.

10. A process for manufacturing a textile composite, ***characterised* in that** it comprises stages involving:
• assembling a sheet (1) consisting of a non-woven material and at least one functional element,
• laying an independent strip onto all or part of the functional element so that said functional element is positioned between said sheet and said strip,
• joining said sheet and said strip by at least partial fusion of their contact surfaces.

11. A process as claimed in claim 10, ***characterised* in that** the fusion operation comprises a thermopressing stage or an ultrasonic welding stage.

## Patentansprüche

1. Textiles Verbundprodukt, umfassend mindestens eine Schicht, die aus einem heißschmelzenden Vlies (1) besteht, und mindestens ein Funktionselement (2, 4, 17), **dadurch gekennzeichnet, dass** das Funktionselement ganz oder teilweise zwischen der Vliesschicht (1) und einem oder mehreren Bändern (3) positioniert ist, die ebenfalls aus einem heißschmelzenden Werkstoff bestehen und von denen eine der Abmessungen deutlich kleiner als die entsprechende Abmessung der Schicht ist, und dass die Schicht (1) und das oder die Bänder (3) durch allermindestens partielles Schmelzen ihrer Kontaktflächen fest verbunden sind.

2. Textiles Verbundprodukt nach Anspruch 1, **dadurch gekennzeichnet, dass** der Arbeitsgang des Schmelzens durch Thermopressen oder durch Ultraschallschweißen vorgenommen wird.

3. Textiles Verbundprodukt nach einem der Ansprüche 1 und 2, **dadurch gekennzeichnet, dass** die Schicht (1) und das oder die Bänder (3) aus demselben Werkstoff hergestellt sind.

4. Textiles Verbundprodukt nach Anspruch 3, **dadurch gekennzeichnet, dass** das Band (3) durch ein Herunterklappen der Schicht (1) auf sich selbst gebildet ist.

5. Textiles Verbundprodukt nach einem der vorhergehenden Ansprüche, **dadurch gekennzeichnet, dass** die Vliesschicht (1) durch Fäden verstärkt ist, die gemäß einem Netz genäht, gewebt oder gestrickt sind, das mindestens eine bevorzugte Richtung aufweist.

6. Textiles Verbundprodukt nach einem der vorhergehenden Ansprüche, **dadurch gekennzeichnet, dass** das Funktionselement aus einem vorzugsweise biegsamen und flexiblen Gitter (4) besteht, so dass ein Verbund-Geotextil gebildet wird.

7. Textiles Verbundprodukt nach den Ansprüchen 1 bis 5, **dadurch gekennzeichnet, dass** das Funktionselement mindestens ein elektrisches Kabel oder eine optische Faser umfasst.

8. Textiles Verbundprodukt nach einem der Ansprüche 1 bis 5, **dadurch gekennzeichnet, dass** das Funktionselement mindestens einen dichten Mantel umfasst, so dass eine Fluid- oder Gasleitung gebildet wird.

9. Textiles Verbundprodukt nach einem der Ansprüche 1 bis 5, **dadurch gekennzeichnet, dass** das Funktionselement mindestens ein Rohr umfasst, das mit Öffnungen versehen ist, die einen Dränageverbund bilden können.

10. Verfahren zur Herstellung eines textilen Verbundprodukts, **dadurch gekennzeichnet, dass** es die Schritte umfasst, die darin bestehen, dass
- eine Schicht (1) zusammengefügt wird, die aus einem Vlies und mindestens einem Funktionselement besteht,
- auf das ganze Funktionselement oder einen Teil davon ein unabhängiges Band so aufgelegt wird, dass das Funktionselement zwischen der Schicht und dem Band positioniert ist,
- die Schicht und das Band durch allermindestens partielles Schmelzen ihrer Kontaktflächen fest verbunden werden.

11. Verfahren nach Anspruch 10, **dadurch gekennzeichnet, dass** der Arbeitsgang des Schmelzens einen Schritt der Thermopressung oder einen Schritt der Ultraschallschweißung umfasst.
